# EUROPÄISCHE PATENTANMELDUNG

(11) **EP 0 598 946 A1**
(43) Veröffentlichungstag der Anmeldung: **01.06.1994**
(21) Anmeldenummer: 92120328.7
(22) Anmeldetag: 27.11.1992
(51) Int. Cl.: G02B 6/38

(54) **Steckverbinder für einen an einen Baugruppenrahmen anschliessbaren Lichtleiter**

(71) Anmelder: SIEMENS AKTIENGESELLSCHAFT, D-80333 München (DE)
(72) Erfinder: Krausse, Peter, W-8011 Aschheim (DE)

(57) **Zusammenfassung**

An einer Rückwandleiterplatte (1) eines Rahmens für einschiebbare elektrische Baugruppen (5) ist eine Zentrierbuchse (7) gehalten, in die eine Zentrierstift (8) eines Steckers (9) für einen Lichtleiter (3) einsteckbar ist. Eine Überwurfmutter (11) verspannt den Stecker (9) mit der Zentrierbuchse (7). Sie ist bis über das Ende des Steckers (9) hinaus verlängert und trägt dort einen Betätigungsabschnitt (14). Zwischen diesem und den Anschlagbereich weist die Überwurfmutter (11) einen glattzylindrischen Kontaktabschnitt (20) für einen mit einer Schirmlage (2) der Rückwandleiterplatte (1) verbundenes Kontaktteil (17) auf.

Dadurch wird die Rückwandleiterplatte (1) gegen hochfrequente Störstrahlungen abgedichtet.

## Beschreibung

Die Erfindung bezieht sich auf einen Steckverbinder für einen Lichtleiter, der an einen Stecker mit einem Zentrierstift angeschlossen ist, der in eine Zentrierbuchse einsteckbar ist, die in einem Haltekörper aufgenommen ist, der an einer Rückwandleiterplatte eines elektrischen Baugruppenrahmens befestigt ist.

Ein derartiger Steckverbinder ist z.B. durch die DE 9010 866 U1 bekannt geworden. Danach ist die Rückwandleiterplatte mit Freibohrungen für die Steckverbindungen versehen. Der Stecker weist eine Überwurfmutter auf, die mit einem mit der Zentrierbuchse verbundenen Gewindestuck verschraubbar ist. Die Überwurfmutter erstreckt sich von einem mittleren Abschnitt des Steckers aus bis über den Zentrierstift. Sie ist zum Zwecke der manuellen Betätigung durchgehend gerändelt.

In der modernen Breitbandvermittlungstechnik ist es üblich, zum Zwecke der Schirmung die Rückwandleiterplatten großflächig mit Schirmlagen zu versehen. Da die Steckverbindung der Lichtleiter von äußeren Kräften im wesentlichen frei bleiben muß, dürfen die Steckverbinderteile die Rückwandleiterplatte nicht berühren. Zwischen der Schirmlage und den Steckverbinderteilen entsteht ein Spalt, der die Qualität der Schirmung verringert, insbesondere, weil die Steckverbinderteile nicht mit Masse verbunden sind.

Der Erfindung liegt die Aufgabe zugrunde, die Schirmsicherheit zu erhöhen.

Diese Aufgabe wird durch die Erfindung gemäß Anspruch 1 gelöst. Durch die Verschiebung des Betätigungsabschnittes von der Rückwandleiterplatte weg zum Ende des Steckers wird Raum für den Kontaktabschnitt geschaffen, in dessen Bereich die metallische Überwurfmutter mit einer glatten, gut leitenden Oberfläche versehen ist. An diese Oberfläche können z.B. eng benachbarte, die Überwurfmutter umgreifende Kontaktfedern anliegen, die mit der Schirmlage der Rückwandleiterplatte verbunden sind, wodurch die Steckerteile hochfrequenzdicht mit Erde verbunden werden können.

In unmittelbarer Nähe der Steckverbinder für die Lichtleiter können z.B. weitere derartige Steckverbinder oder andere elektrische Steckverbinder angeordnet sein, die den Zugang zur kurzen Überwurfmutter nach dem Stand der Technik erschweren. Durch die beträchtliche Verlängerung der Überwurfmutter wird der Betätigungsabschnitt besser zugänglich, so daß insbesondere im Reparaturfall die manuelle Handhabung erheblich erleichtert wird.

Durch eine Weiterbildung der Erfindung nach Anspruch 2 ist das Kontaktteil an der Überwurfmutter axial verschiebbar, wodurch Unterschiede in der Dicke der Rückwandleiterplatte ausgeglichen werden können.

Durch eine andere Weiterbildung der Erfindung nach Anspruch 3 werden die durch das Hülsenteil an sich verdeckten Schlüsselflächen des Steckers von außen zugänglich, wodurch sich die Montage des Steckverbinders vereinfacht. Die Schlüsselflächen werden benötigt, um auf das Steckerteil einen Anschlagring für die Überwurfmutter aufschrauben zu können.

Durch die Weiterbildung nach Anspruch 4 können die Schlüsselflächen als einfache Abflachungen ausgebildet werden, die durch einen einfachen Gabelschlüssel zugänglich sind, der die Stege und die Schlüsselflächen umgreift.

Im folgenden wird die Erfindung eines in der Zeichnung dargestellten Ausführungsbeispiels näher erläutert.
- Figur 1: zeigt schematisiert einen Längsschnitt durch eine Steckverbindung für einen Lichtleiter im Bereich einer Rückwandleiterplatte,
- Figur 2: einen Querschnitt durch Teile der Steckverbindung entlang der Linie II - II in Figur 1.

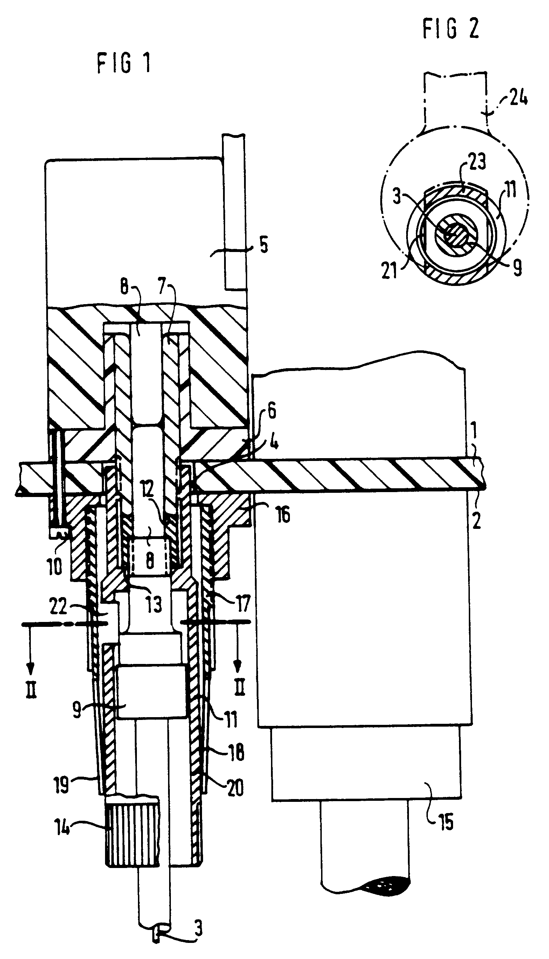

Nach Figur 1 ist eine Rückwandleiterplatte 1 mit einer großflächigen metallischen Schirmlage 2 versehen und weist im Bereich einer Steckverbindung für einen Lichtleiter 3 einen Freibohrung 4 auf. An dieser ist auf der den Baugruppen 5 zugewandten Innenseite der Rückwandleiterplatte 1 ein Haltekörper 6 für eine Zentrierbuchse 7 angesetzt, in die ein Zentrierstift 8 eines Steckers 9 hineinragt, an den der ummantelte Lichtleiter 3 angeschlossen ist. Eine Gegensteckeinrichtung der Baugruppe 5 weist ebenfalls einen Zentrierstift 8 auf, der in der Mitte der Zentrierbuchse 7 stirnseitig an den Zentrierstift 8 für den Lichtleiter 3 anstößt und so mit diesem verschaltet ist.

Der Stecker 9 ist mit einer Überwurfmutter 11 versehen, die an einen aufgeschraubten Anschlagring 12 anstößt. Sie weist an ihrem der Baugruppe 5 zugewandten Ende ein Innengewinde auf, mit dem sie auf ein an der Zentrierbuchse 7 ausgebildetes Außengewinde aufschraubbar ist. Dadurch wird der Anschlagring 12 des Steckers 9 zwischen der Zentrierbuchse 7 und einer Anschlagschulter 13 der Überwurfmutter 11 axial verspannt, wodurch der Stecker 9 mit dem Zentrierstift 8 an der Zentrierbuchse 7 fixiert ist.

Die Überwurfmutter 11 ist im Anschluß an den Bereich des Anschlagrings 12 zum Lichtleiter 3 hin zu einen hohl zylindrischen Hülsenteil erweitert, dessen Innendurchmesser größer ist, als der größte Außendurchmesser des Steckers 9. Die Überwurfmutter 11 überragt den Stecker 9 und trägt an ihrem freien Ende einen gerändelten Betätigungsabschnitt 14, der auch in enger Nachbarschaft eines auf die Rückwandleiterplatte 1 aufgesteckten elektrischen Kabelsteckers 15 von Hand gut erreichbar ist.

Auf der dem Haltekörper 6 abgewandten Seite der Rückwandleiterplatte 1 ist ein Metallkörper 16 vorzugsweise aus Aluminium durch Schrauben 10 befestigt und mit der Schirmlage 2 kontaktiert. Ein hülsenförmiges Kontaktteil 17 ist über die Überwurfmutter 11 geschoben und in ein Innengewinde des Metallkörpers 16 eingeschraubt. Das freie Ende des Kontaktteils 17 ist mit schmalen Längsschlitzen 18 versehen, zwischen denen Federzungen 19 stehen bleiben, die zur Überwurfmutter 11 hin gebogen sind und an dieser in einem Kontaktschnitt 20 anliegen, der glattzylindrisch ausgebildet ist und sich zwischen dem Betätigungsabschnitt 14 und dem Anschlagring 12 befindet. Dadurch wird zwischen dem Kontaktteil 17 und der z.B. aus Messing oder Neusilber bestehenden Überwurfmutter 11 ein enger Massekontakt hergestellt, der das Durchtreten von Störstrahlungen durch die Rückwandleiterplatte 1 weitgehend verhindert.

Der Stecker 9 ist mit abgeflachten Schlüsselflächen 21 versehen, die durch fensterartige Durchbrüche 22 in der Überwurfmutter 11 von außen zugänglich sind. Ein Querschnitt durch diese Teile ist in Figur 2 näher dargestellt. Daraus ist ersichtlich, daß die Durchbrüche 22 so tief in die Überwurfmutter 11 eingeschnitten sind, daß die Breite von stehenbleibenden Stegen 23 höchstens gleich der Schlüsselweite der Schlüsselflächen 21 ist. Damit kann der Stecker 9 durch einen transversal aufgesteckten Gabelschlüssel 24 beim Aufschrauben des Anschlagrings 12 gegen Verdrehen gesichert werden.

## Patentansprüche

1. Steckverbinder für einen Lichtleiter (3), der an einem Stecker (9) mit einem Zentrierstift (8) angeschlossen ist, der in eine Zentrierbuchse (7) einsteckbar ist, die in einem Haltekörper (6) aufgenommen ist, der an einer Rückwandleiterplatte (1) eines elektrischen Baugruppenrahmens befestigt ist, wobei die Rückwandleiterplatte (1) mit Freibohrungen (4) für die Steckverbindungen versehen ist, wobei der Stecker (9) einen Überwurfmutter (11) aufweist, die mit einem mit der Zentrierbuchse (7) verbundenen Gewindestück verschraubbar ist und mit einer Anschlagschulter (13) an einem Anschlagring (12) axial anliegt, und wobei die äußere Mantelfläche der Überwurfmutter mit einem Betätigungsabschnitt (14) von unebener Oberfläche versehen ist,
**dadurch gekennzeichnet,**
daß die Überwurfmutter (11) aus elektrisch leitfähigem Material besteht, daß der Innendurchmesser der Überwurfmutter vom Anschlagbereich aus zum freien Lichtleiter (3) hin auf zumindest den Außendurchmesser des Steckers (9) zu einem Hülsenteil erweitert ist, das über das Steckerende hinausragt und in diesem Endbereich den unebenen Betätigungsabschnitt (14) aufweist, und daß die Überwurfmutter (11) zwischen dem Betätigungsabschnitt (14) und dem Gewindebereich einen Kontaktabschnitt (20) von gut leitender Oberfläche aufweist.

2. Steckverbinder nach Anspruch 1,
**dadurch gekennzeichnet,**
daß der Kontaktabschnitt (20) zum Kontaktieren mit einem axial verschiebbaren Kontaktteil (17) glattzylindrisch ausgebildet ist.

3. Steckverbinder nach Anspruch 1 oder 2,
**dadurch gekennzeichnet,**
daß die Überwurfmutter (11) in ihrem Hülsenteil fensterartige Durchbrüche (22) für Schlüsselflächen (21) des Steckers (9) aufweist.

4. Steckverbinder nach Anspruch 3,
**dadurch gekennzeichnet,**
daß die fensterartigen Durchbrüche (22) so tief in die Überwurfmutter (11) eingeschnitten sind, daß die Breite von stehenbleibenden Stegen (23) höchstens gleich der Schlüsselweite der Schlüsselflächen (21) ist.
